(19) **Europäisches Patentamt / European Patent Office / Office européen des brevets**

(11) **EP 4 557 052 A1**

(12) **EUROPEAN PATENT APPLICATION**
published in accordance with Art. 153(4) EPC

(43) Date of publication:
**21.05.2025 Bulletin 2025/21**

(21) Application number: **22951047.4**

(22) Date of filing: **11.07.2022**

(51) International Patent Classification (IPC):
**G06F 1/329** (2019.01)      **G06F 1/3287** (2019.01)
**G06F 9/50** (2006.01)

(52) Cooperative Patent Classification (CPC):
**G06F 1/3287; G06F 1/329; G06F 9/50;** Y02D 10/00

(86) International application number:
**PCT/JP2022/027327**

(87) International publication number:
**WO 2024/013831 (18.01.2024 Gazette 2024/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON TELEGRAPH AND TELEPHONE CORPORATION**
**Chiyoda-ku, Tokyo 100-8116 (JP)**

(72) Inventors:
• **FUJIMOTO, Kei**
  **Musashino-shi, Tokyo 180-8585 (JP)**
• **SAITO, Shogo**
  **Musashino-shi, Tokyo 180-8585 (JP)**
• **OTANI, Ikuo**
  **Musashino-shi, Tokyo 180-8585 (JP)**
• **NATORI, Ko**
  **Musashino-shi, Tokyo 180-8585 (JP)**

(74) Representative: **Dehns**
**10 Old Bailey**
**London EC4M 7NG (GB)**

(54) **TASK SCHEDULER DEVICE, CALCULATION SYSTEM, AND TASK SCHEDULING METHOD, AND PROGRAM**

(57)     A task scheduler device (100, 100A) that, in a calculation system (1000) that reduces power consumption by reducing stepwise an operation state of a processor according to a processing load, allocates tasks to a core group of the processor, task scheduler device (100, 100A) including: a task amount/period prediction part (122) that acquires a use rate of the processor, and a task CPU allocation part (123) that, based on the use rate of the processor acquired by the task amount/period prediction part (122), continuously allocates tasks to a core or a core group of the processor to be used at a predetermined frequency or more.

FIG.1

**Description**

Technical Field

The present invention relates to a task scheduler device, a calculation system, a task scheduling method, and a program.

Background Art

A description will be given of an overview of a radio access system.

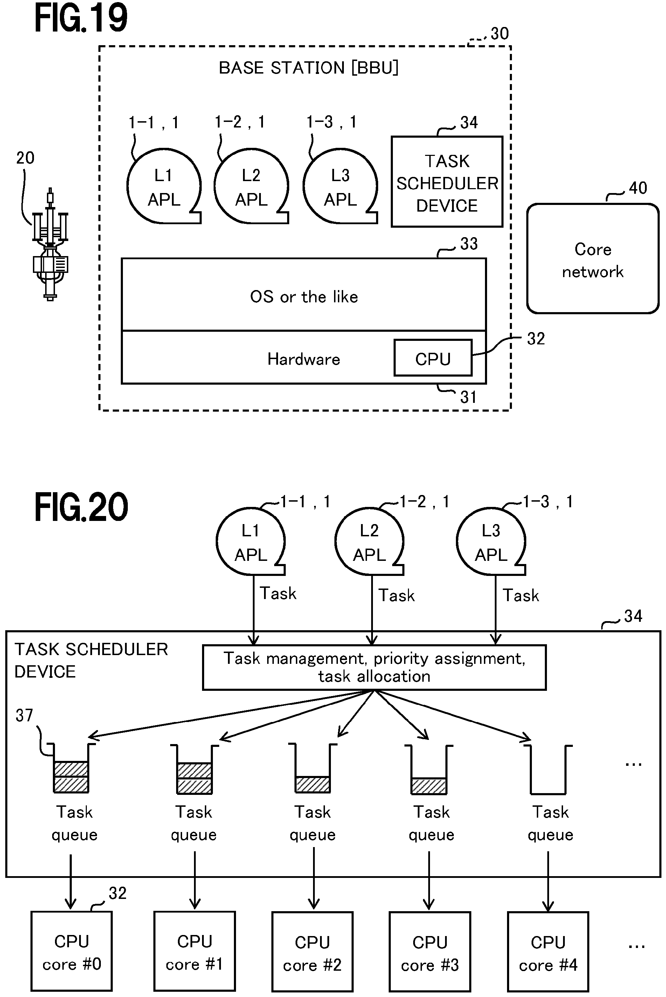

FIG. 19 is a diagram illustrating an overview of a radio access system.

As illustrated in FIG. 19, the radio access system includes not-illustrated user equipment (UE), an antenna (base station antenna) 20, a base station (BBU: Base Band Unit) 30, and a core network 40.

Antenna 20 is an antenna and a transmission and reception unit for performing radio communication with UE 10 (hereinafter, an "antenna" collectively refers to the antenna, the transmission and reception unit, and its power supply unit). Transmission and reception data are connected to base station 30, for example, with a dedicated cable, for example.

Base station 30 is a non-moving radio station located on the land and communicating with UE 10. Base station (BBU: Broad Band Unit) 30, which performs radio signal processing, is dedicated hardware (dedicated device) that performs radio signal processing. Alternatively, base station 30 is a virtual radio access network (vRAN) in which a general-purpose server processes radio signal processing in a Long Term Evolution (LTE) or Five Generation (5G) signal processing aggregation system. In the vRAN, a general-purpose server which is inexpensive and obtainable in large quantities is able to be used as hardware of base station 30.

Base station 30 includes hardware (HW) 31, a central processing unit (CPU) 32 on the hardware, an OS 33 or the like, L1, L2, and L3 protocol radio signal processing applications 1-1, 1-2, and 1-3 (collectively referred to as an APL 1), and a task scheduler device 34.

Core network 40 is an evolved packet core (EPC)/5G core network (5GC), or the like (in the following description, "/" denotes "or").

An example of a system for which real-time capability is required is a base station (BBU) in a RAN.

In a BBU in which operations are performed using CPU 32, it is often that task scheduler device 34 allocates a radio signal processing task to a CPU core to perform operations (Non-Patent Literature 1).

FIG. 20 is a diagram illustrating an example of task management of radio access processing in a base station. The same constituent parts as those in FIG. 19 are denoted by the same reference signs.

Base station (BBU) 30 includes task scheduler device 34. Task scheduler device 34 performs task management, priority assignment, and task allocation.

Task scheduler device 34 allocates a radio signal processing task of APL 1 to a task queue 37, and allocates the task from the task queue 37 to a CPU core (CPU core #0, CPU core #1,...) 32.

[Low power idle (LPI) hardware control]

CPU 32 has a function of controlling an idle state of CPU 32 by hardware control, which is referred to as LPI. The LPI is often referred to as CPUidle or C-state, and LPI will be described below as C-state.

With C-state, when a CPU load decreases, power saving is attempted by turning off the power supply of a portion of the circuit of CPU 32 (NPL 2).

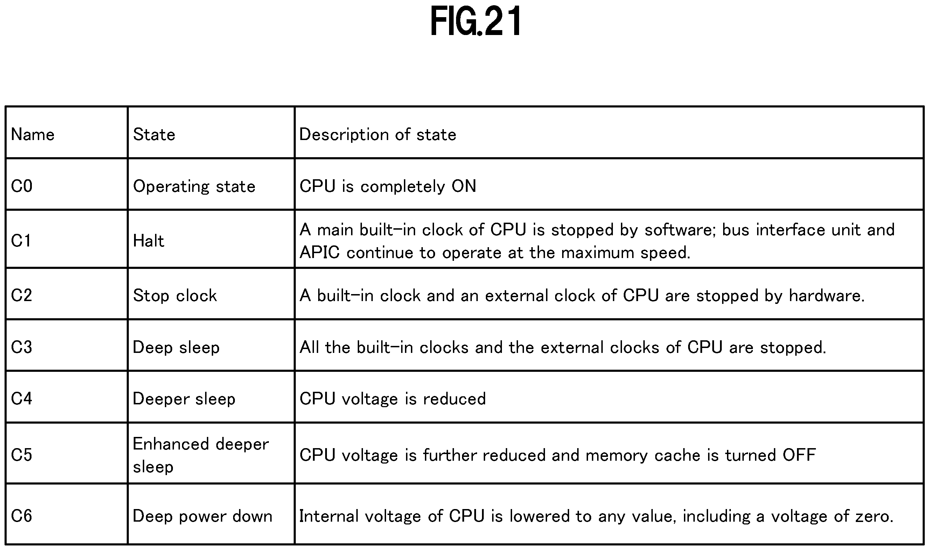

FIG. 21 is a diagram illustrating an example of C-states in the form of a table. Note that as the state definition varies depending on the CPU hardware, FIG. 21 is merely a reference example.

As illustrated in FIG. 21, CPUidle state defines grades C0 to C6, and transitions to a deep sleep state occur as the time during which CPU 32 has no load becomes long. Although the power consumption of the CPU becomes less in a deeper sleep state, the time required until restoration is extended accordingly, which may possibly raise an issue in the perspective of low latency.

The state definition of C-state varies depending on the CPU hardware. For example, there are variations such that a model has no C4 or C5, a model has a state of C1E after C1, and the like.

As the state becomes deeper, the power saving effect becomes greater, but the time required for restoration from the idle state becomes longer accordingly.

In addition, the depth to which the CPUidle state transitions is controlled by the CPU hardware, which is dependent on the CPU product (often cannot be controlled by software such as a kernel).

FIG. 22 is a diagram illustrating an example of the time for transitioning to a state (RESIDENCY) and the maximum value of the time required for restoration (WAKE-UP LATENCY) in the form of a table. FIG. 22 illustrates C-state information in the case of Intel Xeon CPU E5-26X0 v4 (registered trademark).

[CPUidle State Governor]

Linux kernel 4 (registered trademark) provides two types of Governors in order to manage CPU idle states (C-states).

FIG. 23 is a diagram illustrating the types of CPU idle Governor.

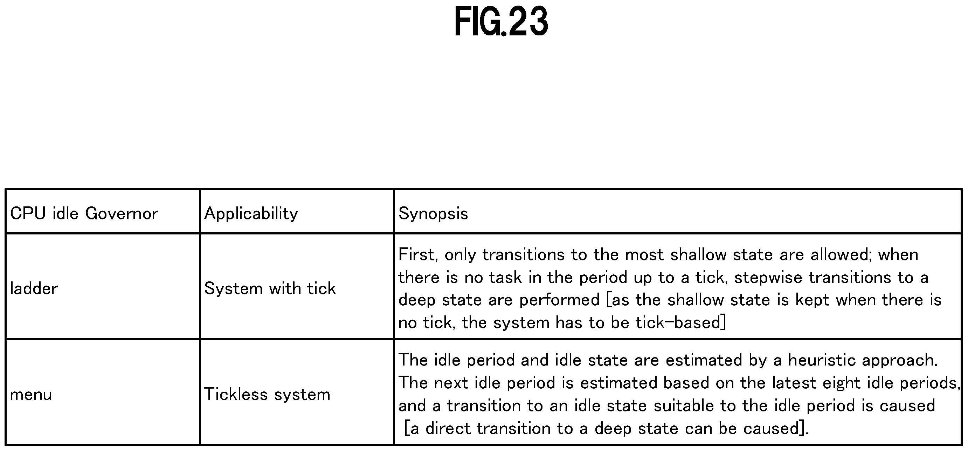

As illustrated in FIG. 23, ladder is used for a system with a tick, and menu is used for a tickless system.

For example, menu, which is used for tickless systems, is a scheme for estimating the depth of an idle state suitable for the next idle period based on the actual record of the latest idle period. menu is effective for workloads in which the idle times are regular but its effect is limited for irregular workloads.

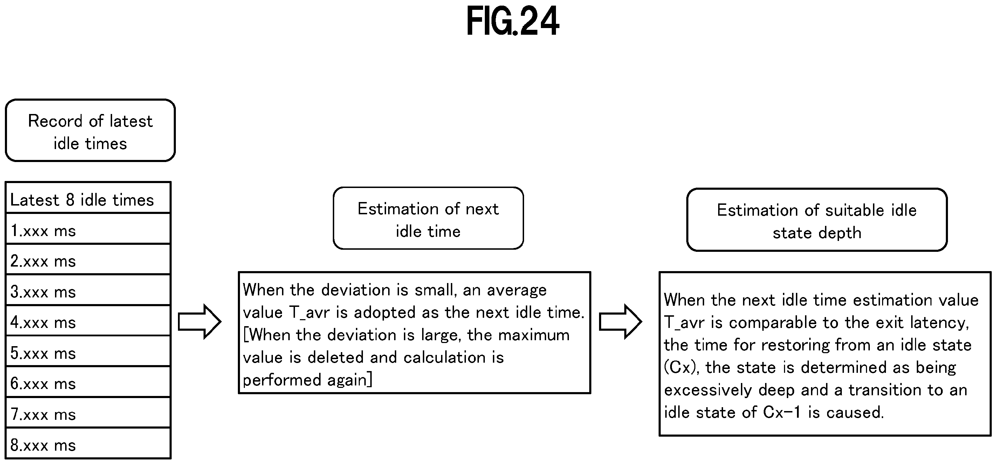

FIG. 24 is a diagram illustrating an overview of the logic of menu.

As illustrated in the left drawing in FIG. 24, menu records the latest idle times. Then, as illustrated in the middle drawing in FIG. 24, menu estimates the next idle time. For example, based on the idle times shown in the left drawing in FIG. 24, when the deviation is small, menu adopts an average value T_avr as the next idle time. As illustrated in the right drawing in FIG. 24, menu estimates a suitable idle state depth based on the estimation of the next idle time. For example, when the next idle time estimation value T_avr is comparable to the exit latency, the time for restoration from an idle state (Cx), menu determines that the idle state is excessively deep and causes a transition to an idle state of Cx-1.

Returning to FIG. 23, for either Governor of the two types of Governors, ladder and menu, no mechanism is provided for, when a new task arrives, issuing a command for waking up in advance from a CPU idle state, in order to cause restoration for preparation. For this reason, there is an issue such that a latency time corresponding to a restoration time occurs when a task is allocated in a state in which a transition to a deep state has been made.

Citation List

Non-Patent Literature

Non-Patent Literature 1: New API(NAPI), [online], [retrieved on June 6, 2022], the Internet <URL :https://www.kernel.org/doc/html/latest/admin-guide/pm/cpuidle.html>

Non-Patent Literature 2: Daniel Molka & Michael Werner, Wake-up latencies for processor idle states on current x86 processors Robert Schone, [online], [retrieved on June 6, 2022], the Internet <URL: https://link.springer.com/article/10.1007/s00450-014-0270-z#citeas>

SUMMARY OF THE INVENTION

Problems to be Solved by the Invention

As illustrated in FIG. 21, CPUidle state defines grades, and transitions to a deep sleep state occur as the time during which the CPU has no load becomes long. Although the power consumption of the CPU becomes less in a deeper sleep state, the time required for restoration is extended accordingly, which may possibly raise an issue in the perspective of low latency.

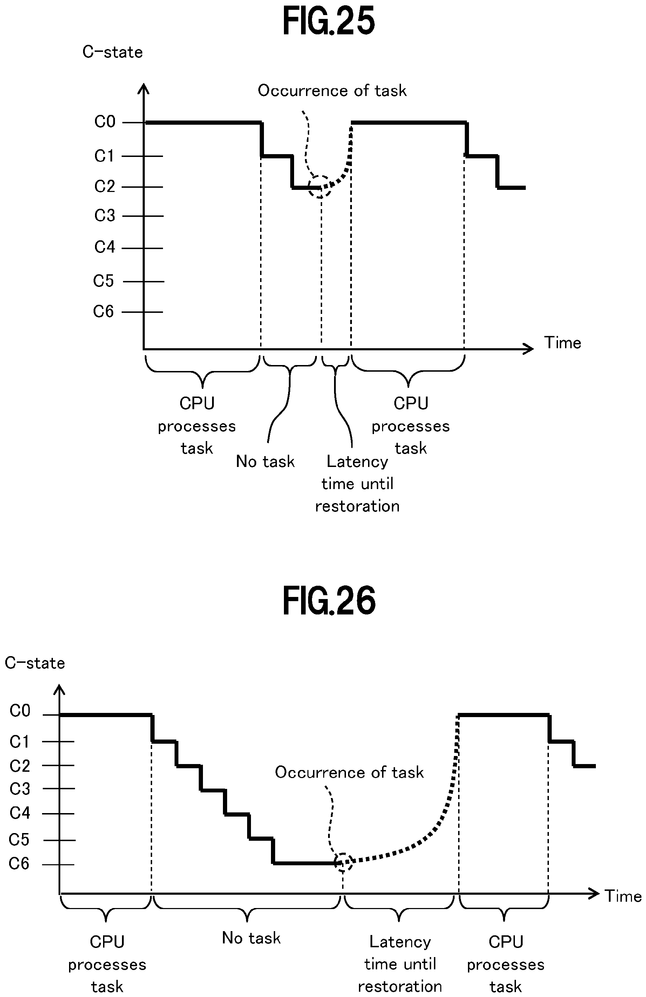

FIGS. 25 and 26 are image diagrams illustrating C-state transitions of a CPU core used for operations. FIG. 25 illustrates a case where a time with no task is short and FIG. 26 illustrates a case where a time with no task is long.

As illustrated in FIG. 25, when the time with no task is short, the CPU core is in a shallow sleep state, and thus the latency time from the occurrence of a task to the restoration is short. However, as illustrated in FIG. 26, when the time with no task is long, the CPU core is in a deep sleep state (CPUidle state: grade C6), in which case the latency time from the occurrence of a task to the restoration is extended. There is an issue that when the CPU core falls to a deep CPU idle state, it takes a long time to complete restoration, impairing real-time capability.

The above-mentioned issue is a problem that cannot be overlooked in a system in which real-time capability is given the highest priority, such as the base station (BBU) 30 illustrated in FIGS. 19 and 20.

For this reason, in the base station (BBU), a countermeasure of applying a setting to invalidate C-states or to limit the transition of idle states to a limited depth such as C1 is adopted. That is, in some cases, tuning for prioritizing real-time capability at the expense of power saving is implemented.

In conventional base stations (BBU), once the CPU core has fallen to a deep C-state, there is no choice but to wait until the CPU core has eventually been restored. For this reason, countermeasures to cause the CPU core not to fall to a deep place is adopted at the expense of power saving.

The present invention has been made in view of such a background, and an object of the present invention is to perform operations with a low latency while achieving power saving.

Solution to Problem

In order to solve the above-described problem, there is provided a task scheduler device that, in a calculation system that reduces power consumption by reducing stepwise an operation state of a processor according to a processing load, allocates tasks to a core group of the processor, the task scheduler device including: a processor use rate acquisition part that acquires a use rate of the processor; and a task allocation part that, based on the use rate of the processor acquired by the processor use rate acquisition part, continuously allocates tasks to a core or a core group of the processor to be used at a predetermined frequency or more.

Advantageous Effects of Invention

According to the present invention, it is possible to perform operations with a low latency while achieving power saving.

BRIEF DESCRIPTION OF THE DRAWINGS

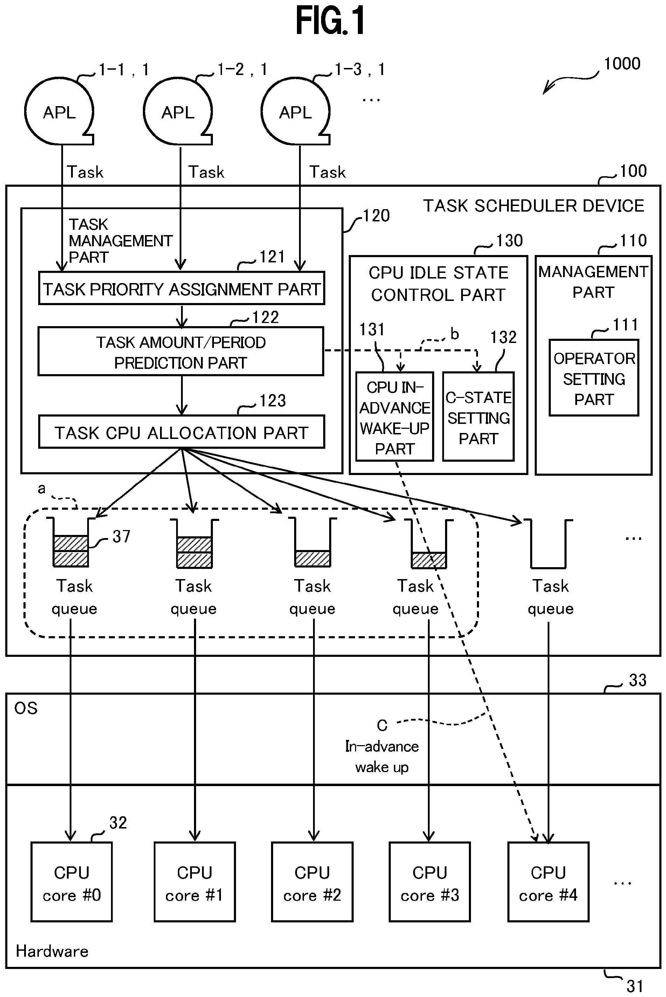

[FIG. 1] FIG. 1 is a schematic configuration diagram of an operation system according to an embodiment of the present invention.

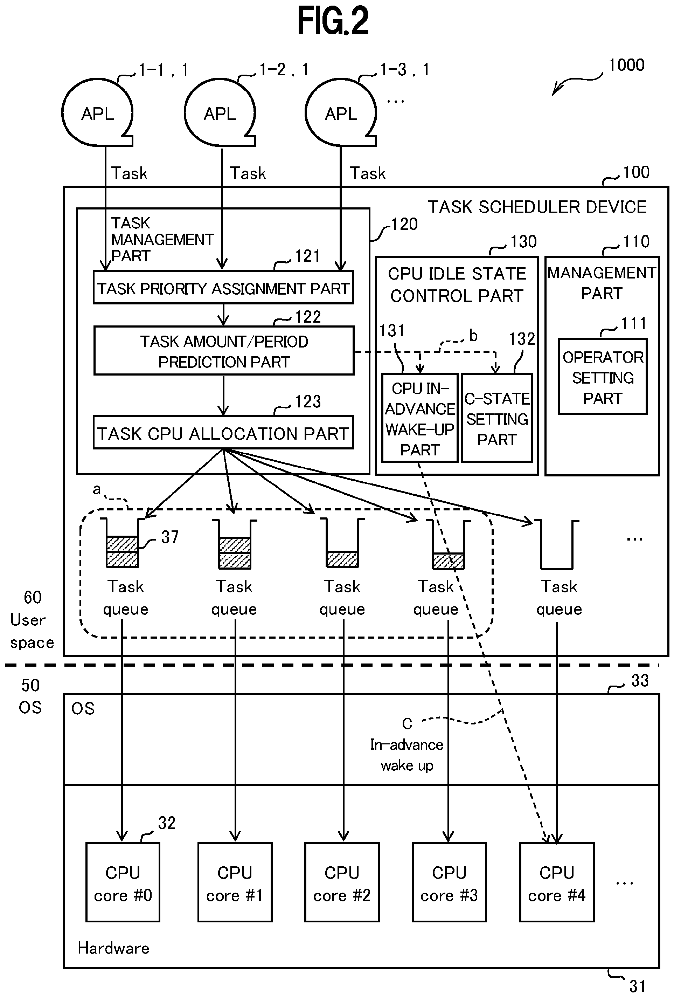

[FIG. 2] FIG. 2 illustrates a configuration example in which a task scheduler device of the operation system according to the embodiment of the present invention is deployed in a user space.

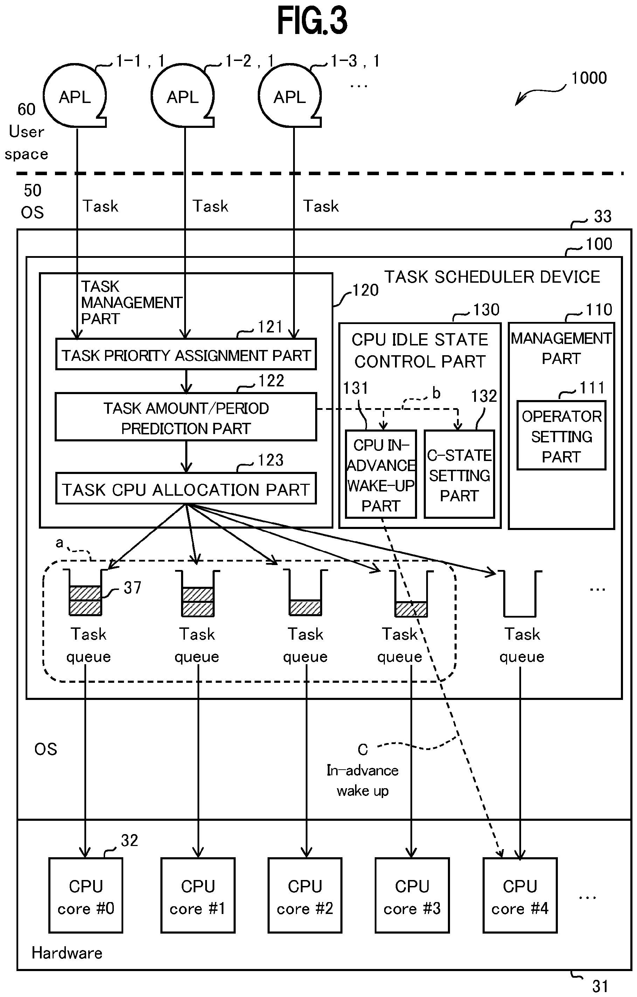

[FIG. 3] FIG. 3 illustrates a configuration example in which the task scheduler device of the operation system according to the embodiment of the present invention is deployed in an OS.

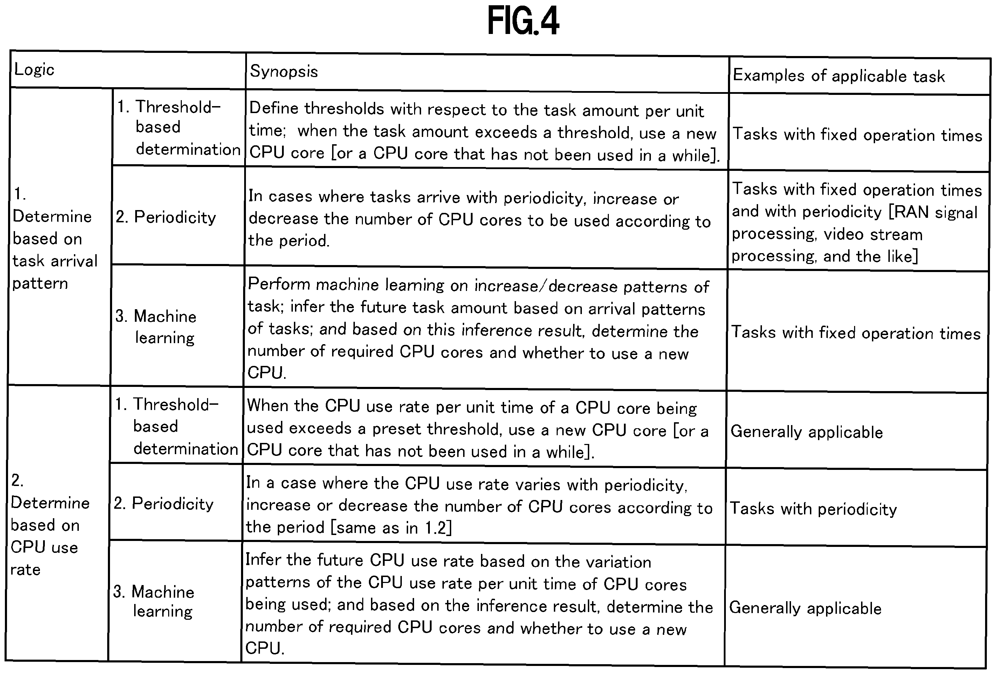

[FIG. 4] FIG. 4 is a diagram illustrating a required number estimation logic for an active CPU core group of the task scheduler device of the operation system according to the embodiment of the present invention in the form of a table.

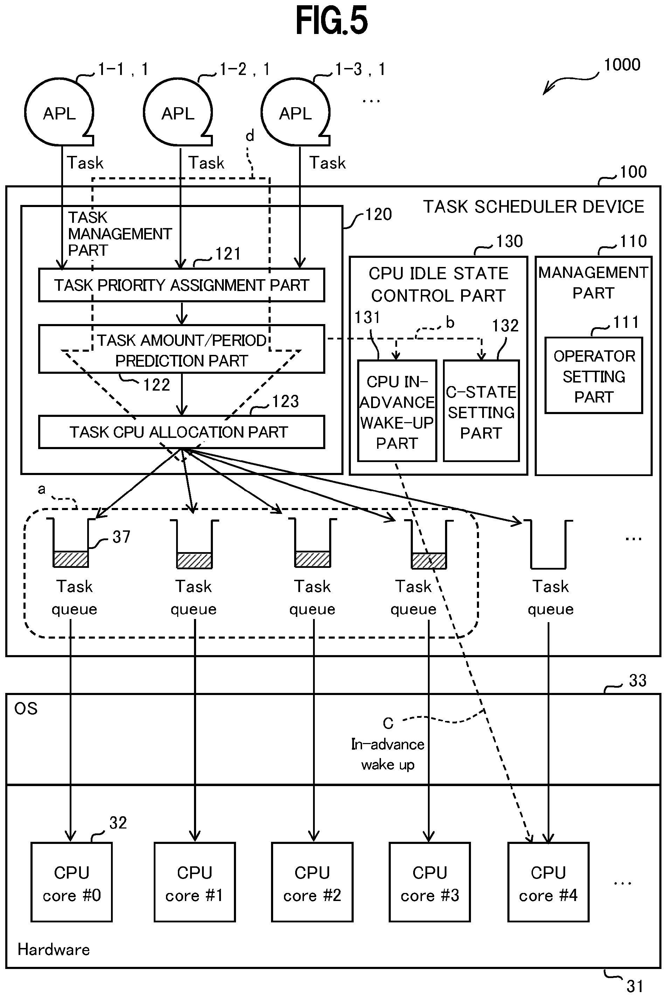

[FIG. 5] FIG. 5 is a diagram illustrating a task amount threshold-based determination and a CPU use rate threshold-based determination operation of the task scheduler device of the operation system according to the embodiment of the present invention.

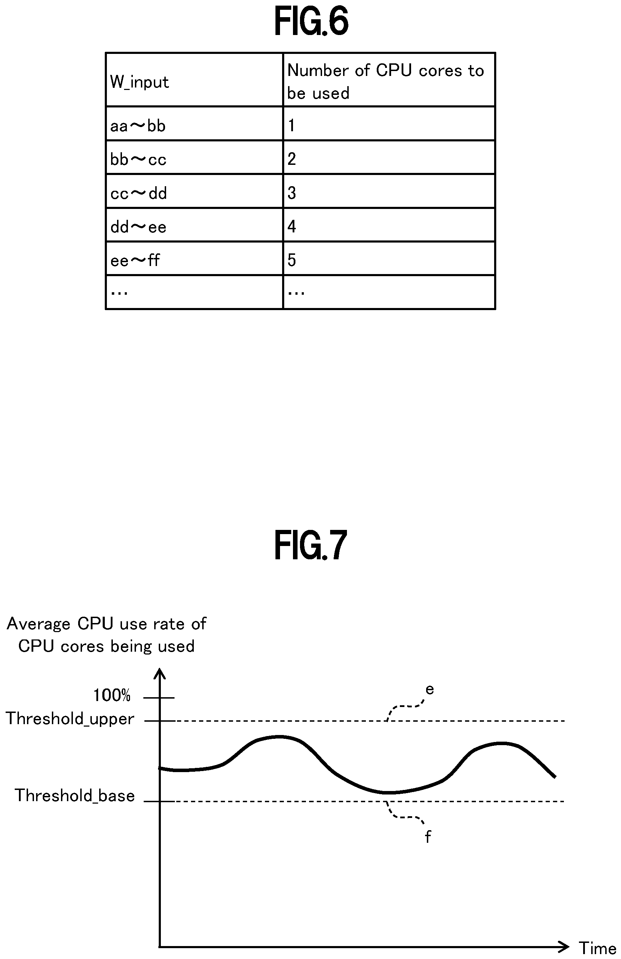

[FIG. 6] FIG. 6 is a diagram illustrating an image of threshold-based determination based on a task inflow amount by the task scheduler device of the operation system according to the embodiment of the present invention.

[FIG. 7] FIG. 7 is a diagram illustrating an image of threshold-based determination based on a CPU use rate by the task scheduler device of the operation system according to the embodiment of the present invention.

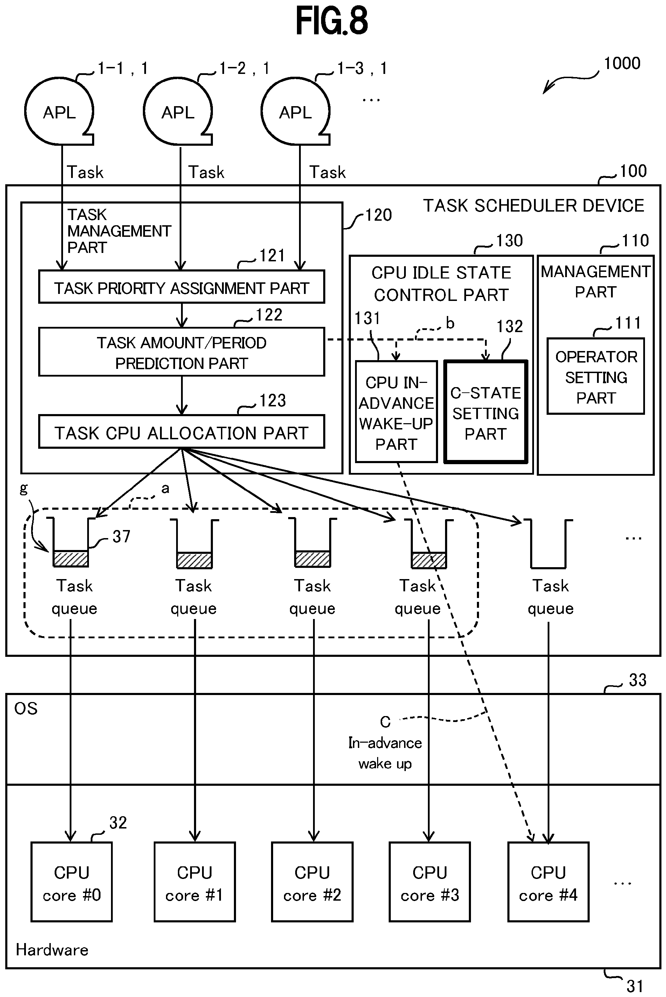

[FIG. 8] FIG. 8 is a diagram illustrating C-state upper limit setting of the task scheduler device of the operation system according to the embodiment of the present invention.

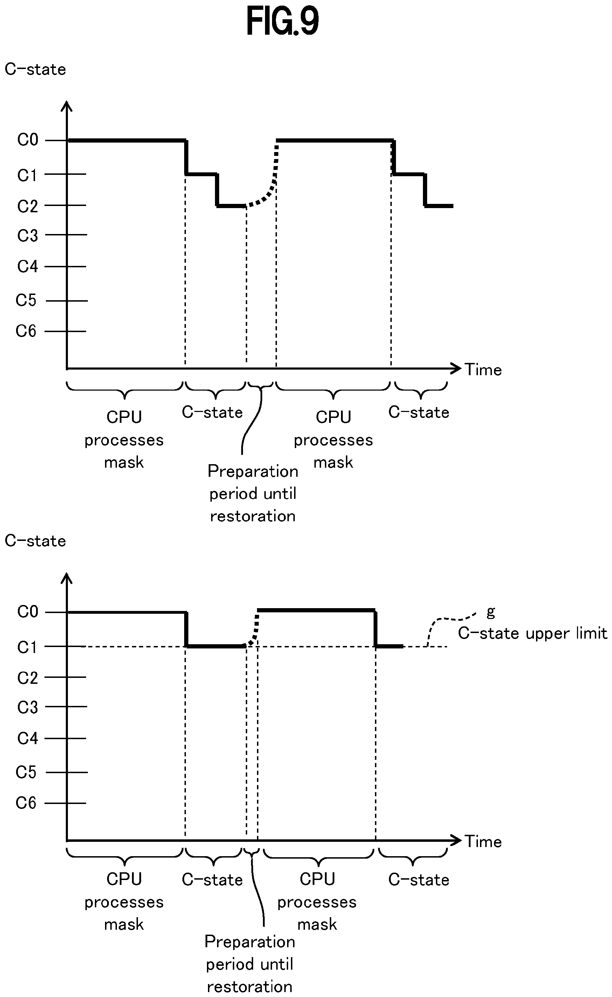

[FIG. 9] FIG. 9 is a diagram illustrating a case where C-state upper limit setting is not performed and a case where C-state upper limit setting is performed in the operation system according to the embodiment of the present invention.

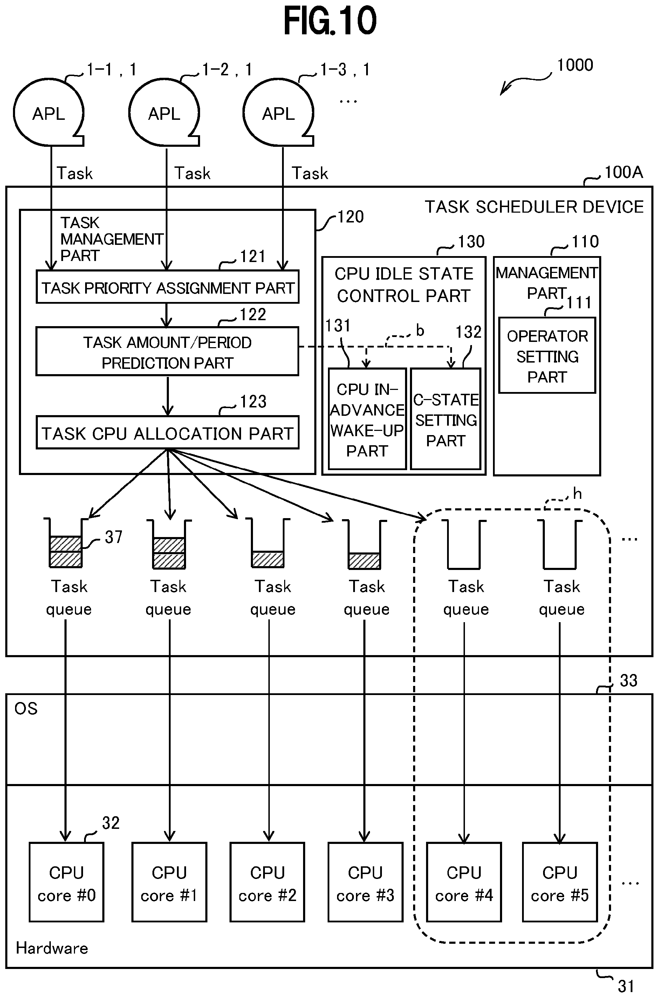

[FIG. 10] FIG. 10 is a diagram illustrating pooling highly-likely-to-be-used CPU cores by the task scheduler device of the operation system according to the embodiment of the present invention.

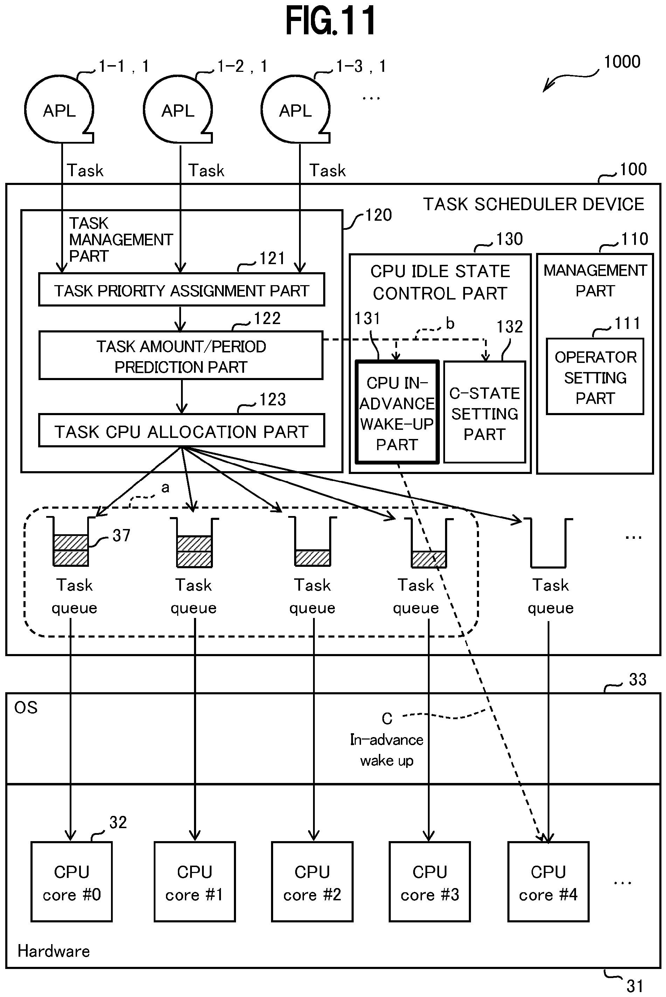

[FIG. 11] FIG. 11 is a diagram illustrating an in-advance wake-up by the task scheduler device of the operation system according to the embodiment of the present invention.

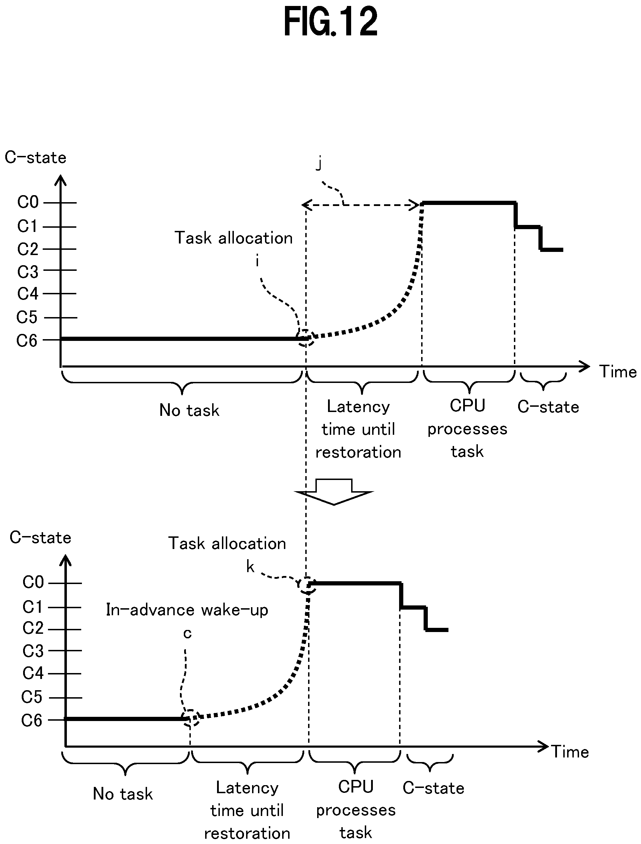

[FIG. 12] FIG. 12 is a diagram illustrating an in-advance wake-up by the task scheduler device of the operation system according to the embodiment of the present invention.

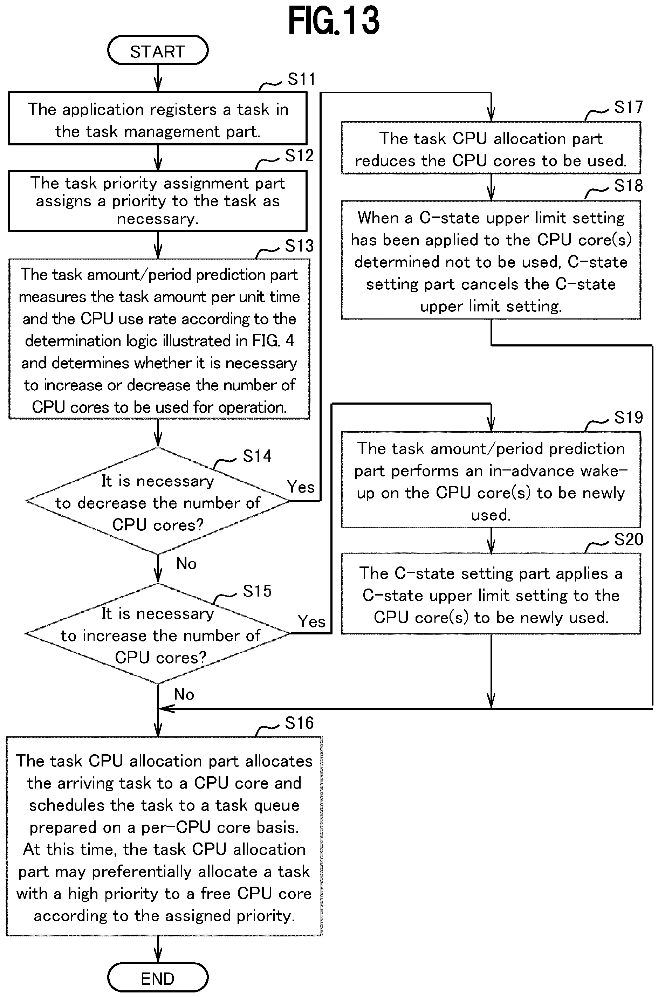

[FIG. 13] FIG. 13 is a flowchart illustrating task scheduling processing by the task scheduler device of the operation system according to the embodiment of the present invention.

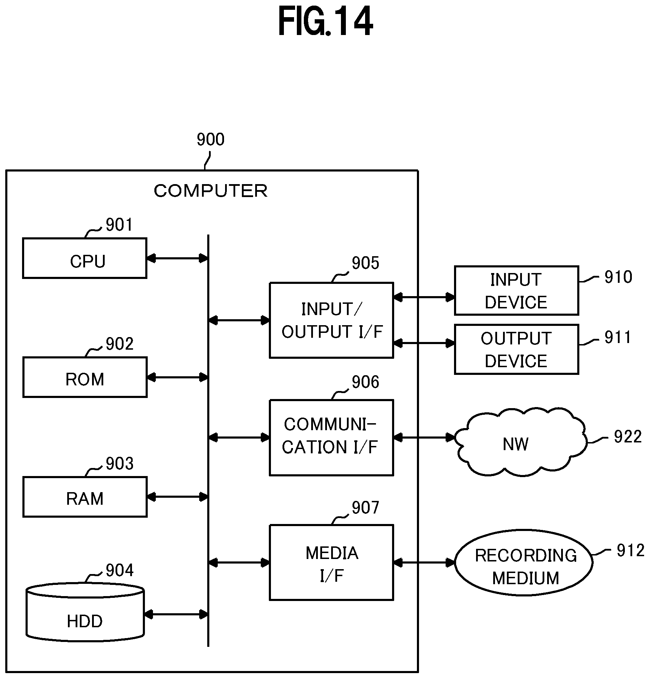

[FIG. 14] FIG. 14 is a hardware configuration diagram illustrating an example of a computer that implements functions of the task scheduler device of the operation system according to the embodiments of the present invention.

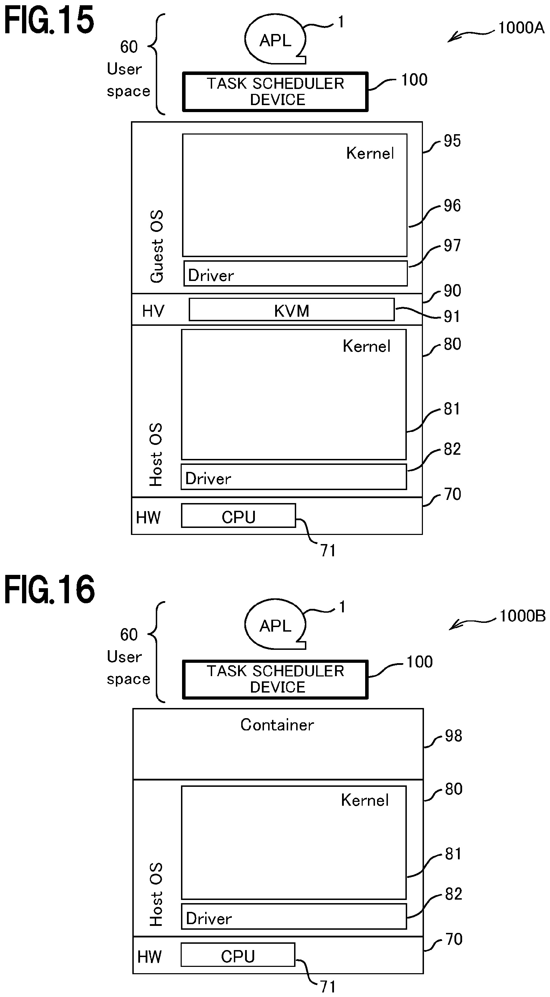

[FIG. 15] FIG. 15 is a diagram illustrating an example in which the operation system according to the embodiment of the present invention is applied to an interrupt model in a server virtualization environment which is configured with a general-purpose Linux kernel (registered trademark) and a VM.

[FIG. 16] FIG. 16 is a diagram illustrating an example in which the operation system according to the embodiment of the present invention is applied to an interrupt model in a server virtualization environment configured with a container.

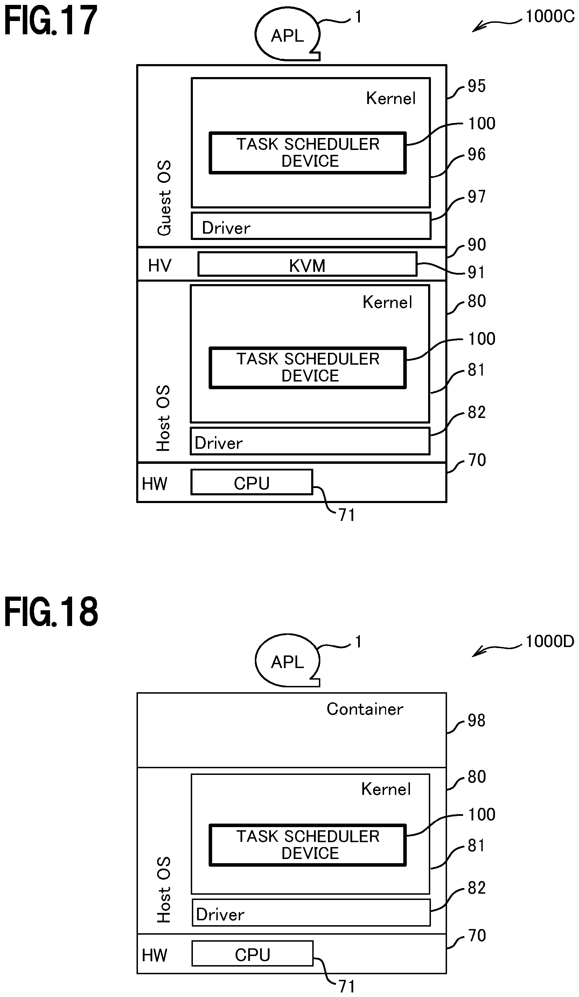

[FIG. 17] FIG. 17 is a diagram illustrating an example in which the operation system according to the embodiment of the present invention is applied to an interrupt model in a server virtualization environment which is configured with a general-purpose Linux kernel (registered trademark) and a VM.

[FIG. 18] FIG. 18 is a diagram illustrating an example in which the operation system according to the embodiment of the present invention is applied to an interrupt model in a server virtualization environment configured with a container.

[FIG. 19] FIG. 19 is a diagram illustrating an overview of a radio access system.

[FIG. 20] FIG. 20 is a diagram illustrating an example of task management of radio access processing in a base station.

[FIG. 21] FIG. 21 is a diagram illustrating an example of C-states in the form of a table.

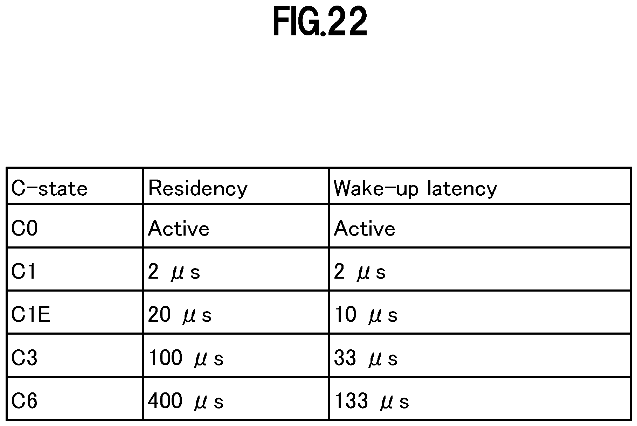

[FIG. 22] FIG. 22 is a diagram illustrating an example of the time for transitioning to a state (RESIDENCY) and the maximum value of the time required for restoration (WAKE-UP LATENCY) in the form of a table.

[FIG. 23] FIG. 23 is a diagram illustrating the types of CPU idle Governor.

[FIG. 24] FIG. 24 is a diagram illustrating an overview of the logic of menu.

[FIG. 25] FIG. 25 is an image diagram illustrating C-state transitions of a CPU core used for operations.

[FIG. 26] FIG. 26 is an image diagram illustrating C-state transitions of C-state of a CPU core used for operations.

MODES FOR CARRYING OUT THE INVENTION

Hereinafter, an operation system and the like according to modes for carrying out the present invention (hereinafter referred to as "the present embodiment") will be described with reference to the drawings.

[Overview]

FIG. 1 is a schematic configuration diagram of an operation system according to an embodiment of the present invention. The same constituent parts as those in FIG. 20 are denoted by the same reference signs.

The present embodiment is an example in which the present invention is applied to a CPU as an operation system. In addition to the CPU, the present invention can be similarly applied to a processor such as a graphic processing unit (GPU), a field programmable gate array (FPGA), and an application specific integrated circuit (ASIC) when the processor is equipped with an idle state function.

As illustrated in FIG. 1, an operation system 1000 includes hardware (HW) 31, CPU cores (CPU core #0, CPU core #1,...) 32 (processors) on the hardware 31, an OS 33, L1, L2, and L3 protocol radio signal processing applications 1-1, 1-2, and 1-3 (collectively referred to as an APL 1), and a task scheduler device 100.

Operation system 1000 is a calculation system that reduces power consumption by reducing stepwise an operation state of the processor according to a processing load. In operation system 1000, the processor has a plurality of core groups, and includes task scheduler device 100 that allocates tasks to a core group of the processor.

[Task Scheduler Device 100]

Task scheduler device 100 includes a management part 110, a task management part 120, and a CPU idle state control part 130.

<Management part 110>

The management part 110 includes a operator setting part 111.

Operator setting part 111 allows an operator to set parameters related to the C-state. For example, with operator setting part 111, an administrator applies a C-state upper limit setting in advance taking into account a time lag from the application of the C-state upper limit setting to the reflection thereof.

<Task management part 120>

Task management part 120 includes a task priority assignment part 121, a task amount/period prediction part 122 (processor use rate acquisition part), and a task CPU allocation part 123 (task allocation part).

Task priority assignment part 121 assigns a task priority to a task transmitted from APL 1 as necessary. Task management part 120 executes priority control of allocation to the CPU core according to the priority.

Here, the most accurate representation of the CPU state is considered to be a "CPU use rate per unit time of a CPU core being used". The "CPU use rate per unit time of the CPU core being used" can be substantially estimated by a task amount. How the CPU is busy can be estimated by the task amount, but it depends on how many processes the CPU is not good at, which cannot be measured by the task amount. Furthermore, when the processor is a GPU, an FPGA, and an ASIC other than CPUs, processing that the processor is good at or not good at also varies. In the present embodiment, the task amount is used as a physical amount related to the "CPU use rate per unit time of the CPU core being used".

Task amount/period prediction part 122 acquires the use rate of the processor. Specifically, task amount/period prediction part 122 measures a task amount per unit time and/or a CPU use rate according to a determination logic illustrated in FIG. 4, and determines whether the number of CPU cores to be used for operations needs to be increased or decreased.

Task amount/period prediction part 122 performs an in-advance wake-up on a CPU core to be newly used. There are many CPU products such that the C-state is restored to C0 when certain processing is executed by the CPU core. For this reason, there is a method in which the CPU core executes processing such as small operations and/or outputting a character string to a standard output.

Task CPU allocation part 123 continuously allocates tasks to a core or a core group of a processor to be used at a predetermined frequency or more, based on the processor use rate acquired by task amount/period prediction part 122 (processor use rate acquisition part). Task CPU allocation part 123 reduces, for example, CPU cores to be used. As a method of reducing the CPU cores, a CPU core not to be used onward is determined, and no task is allocated to the CPU core onward.

Task CPU allocation part 123 allocates an arriving task to a CPU core (allocation to the CPU core may be performed by performing a round-robin on the CPU cores being used, or the task may be allocated to a CPU core with a task queue prepared on a per-CPU core basis and having small residues), and schedules the task into the task queue prepared per-CPU core basis.

At this time, a task with a high priority may be preferentially allocated to an free CPU core according to the assigned priority. Further, the per-CPU core task queue may be rearranged according to the priority.

<CPU idle state control part 130>

CPU idle state control part 130 includes a CPU in-advance wake-up part 131 (in-advance wake-up part) and a C-state setting part 132 (operation state setting part).

When a task is allocated to a core to be newly used or to a core to be used again without having been used for a predetermined period, CPU in-advance wake-up part 131 performs an in-advance wake-up of restoring the operation state of the processor to the original state (see sign c in FIG. 1).

C-state setting part 132 sets an upper limit of a core or a core group of the processor to be used at a predetermined frequency or more so that the operation state of the processor cannot be caused to transition to a deeper state. Specifically, C-state setting part 132 applies a C-state upper limit setting to a CPU core(s) to be newly used. An upper limit state is determined by being set by an operator (see sign b in FIG. 1).

When tasks steadily inflow and tasks are continuously allocated, as an active CPU core group does not transition into a deep C-state, it may not be necessary to apply the upper limit setting.

Here, rather than performing an in-advance wake-up, a C-state upper limit setting may be applied to a CPU core(s) to be newly used before allocating a task(s) to the CPU core, to restore the CPU core(s) to a shallow state. In this case, the C-state upper limit setting is applied in advance taking into account a time lag from the application of the C-state upper limit setting to the reflection thereof.

When a C-state upper limit setting has been applied to a CPU core determined not to be used, C-state setting part 132 cancels the upper limit setting.

C-state setting part 132 applies a setting to a core or a core group to which a task(s) have not been allocated by task CPU allocation part 123 (task allocation part) so that the operation state of the processor can transition to a deeper state.

[Arrangement of task scheduler device]

FIGS. 2 and 3 are diagrams illustrating the deployment of task scheduler device 100 in FIG. 1.

• Deployment of task scheduler device into user space

FIG. 2 illustrates a configuration example in which task scheduler device 100 illustrated in FIG. 1 is deployed in a user space.

In operation system 1000 illustrated in FIG. 2, task scheduler device 100 is deployed in a user space 60. Operation system 1000 executes a packet processing APL 1 deployed in the user space 60. Operation system 1000 executes the packet processing APL 1 on a server including an OS.

The present invention is able to be applied to a case where there is a thread in the user space 60, such as in Intel data plane development kit (DPDK) (registered trademark).

• Deployment of task scheduler device in OS

FIG. 3 illustrates a configuration example in which task scheduler device 100 illustrated in FIG. 1 is deployed in an OS 50.

In operation system 1000 illustrated in FIG. 3, task scheduler device 100 is deployed in OS 50. Operation system 1000 executes packet processing APL 1 on a server including OS 50.

The present invention is able to be applied to a case where there is a thread inside a kernel, such as in New API (NAPI) (registered trademark) (NPL 1) and a kernel-based virtual machine (KBP).

[Required number estimation logic for active CPU core group]

A description will be given of a required number estimation logic for active CPU core groups (see dashed box a in FIG. 1).

The present inventors have considered continuously allocating tasks to an active CPU core group and causing the other CPU cores to transition to a deep C-state to reduce power consumption.

For this, it is necessary to, regarding the management of the active CPU core group, calculate the number of necessary CPU cores based on a task inflow amount, for example.

FIG. 4 is a diagram illustrating a required number estimation logic for an active CPU core group in the form of a table.

As illustrated in FIG. 4, determinations of the estimation logic include "1. determination based on task arrival pattern" and "2. determination based on CPU use rate", each of which is based on threshold-based determination, periodicity, and machine learning.

As illustrated in FIG. 4, as applicable tasks differ per determination logic, a logic is selected to be used taking into account the applicability described in the right column of the table in FIG. 4. A plurality of determination logics may be used in combination.

The operation of operation system 1000 configured as described above will be described below.

[Basic idea of operation of task scheduler device 100]

According to the present invention, in an operation system requiring real-time capability, a task scheduler allocating a task(s) to a CPU core(s) allocates the task(s) taking into account the C-state of the CPU core(s).

Feature <1>: Continuous task allocation

By keeping a CPU core group with a high use frequency and continuously allocating tasks thereto, transitions to a deep C-state is prevented (FIGS. 5 to 7).

As illustrated by dashed box a in FIG. 5, a CPU core group (active CPU core group) to be frequently used is kept by the determination logic illustrated in FIG. 4 according to the task amount, and tasks are continuously allocated to the CPU core group. Thereby, transitions to a deep C-state is prevented and the restoration latency from a C-state is reduced. Except the active CPU cores, transitions to a deep C-state can be made and power saving can be achieved.

Feature <2>: C-state upper limit setting

As a countermeasure for a case where tasks are not continuously allocated, a C-state upper limit to which a transition can be made is set for a CPU core group having a high use frequency (FIGS. 8 to 10).

As a countermeasure for a case where tasks are not continuously allocated to an active CPU core, a setting of C-state upper limit from which a transition to the active CPU core group is available is applied to prevent a transition to a deep C-state and reduce the restoration latency.

Feature <3>: In-advance wake-up

The restoration time from a deep state is reduced by performing an in-advance wake-up before allocating a task to a CPU core which has transitioned to a deep state (FIGS. 11 to 12).

The restoration time from a deep C-state is reduced by performing an in-advance wake-up before allocating a task to a CPU core to be newly used (CPU core that has not been used in a while).

Feature <1>, Feature <2>, and Feature <3> will be described in order below.

[Task amount threshold-based determination and CPU use rate threshold-based determination] (Feature <1>: Continuous task allocation)

FIG. 5 is a diagram illustrating a task amount threshold-based determination and a CPU use rate threshold-based determination operation of task scheduler device 100.

<Task amount threshold-based determination operation>

First, a description will be given of a task amount threshold-based determination operation.

Task management part 120 performs a task amount threshold-based determination operation.

As shown by dashed arrow d in FIG. 5, task priority assignment part 121 assigns priorities of tasks as necessary.

Task amount/period prediction part 122 measures a task amount per unit time and a CPU use rate according to the determination logic illustrated in FIG. 4 to determine whether the number of CPU cores to be used for operations needs to be increased or decreased.

FIG. 6 is a diagram illustrating an image of threshold-based determination based on a task inflow amount.

Task management part 120 manages the CPU cores based on the task inflow amount illustrated in FIG. 6.

In FIG. 6, a task inflow amount: W_input per unit time is correspondingly associated with the number of CPU cores to be used. For example, when W_input is "dd to ee", the number of CPU cores to be used is "4", and the active CPU core group (see a dashed box a in FIG. 5) is "4".

Referring back to FIG. 5, task CPU allocation part 123 allocates an arriving task to a CPU core and schedules the task to the task queue prepared on a per-CPU core basis. At this time, a task with a high priority is preferentially allocated to a free CPU core according to the assigned priority. Further, the per-CPU core task queue is rearranged according to the priorities.

Task management part 120 designs, for tasks whose operation time will be completed in a fixed time, the number of CPU cores required for operations corresponding to a task inflow amount per unit time according to the threshold-based determination table illustrated in FIG. 6. Furthermore, when the task inflow amount exceeds a threshold (threshold of W_input) in the threshold-based determination table illustrated in FIG. 6, it is possible to determine whether the number of CPU cores to be used needs to be increased. In FIG. 6, a state of $dd < W\_input < ee$ is occurring and four CPU cores are being used. When the task inflow amount becomes as $W\_input \geq ee$, the number of CPU cores is increased from four to five.

<Example of calculation of the number of required CPU cores>

Next, an example of calculation of the number of required CPU cores will be described.

Task management part 120 (FIG. 5) calculates the number of required CPU cores.

When the task operation time is fixed (or the fluctuation thereof is small), it is possible to calculate the number of CPU cores N required to satisfy a maximum waiting time by using the queue theory with defining a maximum waiting time Tw allowed by the service. Although the following Equation (3) does not take into account the restoration time from a C-state, it is not necessary to consider the restoration time from the C-state as long as the restoration time from the C-state can be brought close to zero as far as possible according to the present embodiment.

• Example of calculation of the number of required CPU cores

$\lambda$ [pieces/s]: Task inflow amount per unit time (W_input)

$\mu$ [pieces/s]: Number of tasks, per unit time, that can be processed by the system

Ts [s]: Time required for the system to process one task

t_s [s]: Time required for one CPU core to perform one task operation

Tw [s]: Maximum waiting time allowed for the service

N [pieces]: Number of CPU cores being used

$\rho = \lambda / \mu$: Degree of congestion

$$\mu = N / t\_s$$

$$Ts = 1 / \mu = t\_s / N$$

$$Tw = (\rho / (1 - \rho)) * Ts \dots (1)$$

Substituting $\rho$ and Ts into Equation (1) results in Equation (2).

$$Tw = ((\lambda / \mu) / (1 - (\lambda / \mu)) * (t\_s / N) \dots (2)$$

By substituting $\mu$ into the above equation (2) and solving the equation, we obtain equation (3).

$$N^2 - \lambda \cdot t\_s \cdot N - \lambda \cdot t\_s^2 / Tw = 0 \dots(3)$$

A minimum natural number satisfying this equation is to be obtained.

<CPU use rate threshold-based determination operation>

Next, a description will be given of a CPU use rate threshold-based determination operation.
FIG. 7 is a diagram illustrating an image of threshold-based determination based on a CPU use rate. The vertical axis represents average CPU use rate of CPU cores being used and the horizontal axis represents time.
Relative to an average CPU use rate of 100% , two thresholds, Threshold_upper (upper limit) (see dashed line e in FIG. 7) and Threshold_base (lower limit) (see dashed line f in FIG. 7) are set.
When the average CPU use rate exceeds the upper limit, task management part 120 (FIG. 5) increases the number of CPU cores to be used. In addition, when the average CPU use rate falls below the lower limit, task management part 120 reduces the number of CPU cores to be used.
When the average CPU use rate of the CPU cores being used exceeds Threshold_upper (upper limit), it is a sign that the number of CPU cores being used is becoming insufficient and thus it is possible to make a determination to newly increase the number of CPU cores. On the other hand, when the average CPU use rate of the CPU cores being used falls below Threshold_base (lower limit), the number of CPU cores is excessive and thus it is possible to make a determination to reduce the number of CPU cores being used.
Here, when newly increasing the number of CPU cores as described above, it is assumed that the pertinent CPU core(s) have fallen to a deep C-state, as they are CPU cores that have not been used until now. In particular, we have described a method of calculating the restoration time in restoring such a CPU core having fallen to a deep C-state in the above-described <Example of calculation of required number of CPU cores>
Hereinabove, the task amount threshold-based determination and the CPU use rate threshold-based determination have been described.

[C-state upper limit setting] (Feature <2>: C-state upper limit setting)

<C-state upper limit setting operation>

FIG. 8 is a diagram illustrating C-state upper limit setting by task scheduler device 100.
C-state setting part 132 of CPU idle state control part 130 sets (see sign b in FIG. 8), to a CPU core group with a high use frequency, a C-state upper limit to which a transition can be made.
As it is highly likely that a task will be allocated to a CPU core with a high use frequency, even when the CPU core is made to transition to a deep idle state, the stay period in the state will be short and thus a power saving effect won't be enjoyed much. Despite the fact that the power saving effect won't be enjoyed, the disadvantage due to the restoration time overhead from the idle state may occur.

In the present embodiment, regarding this issue, for a CPU core with a high use frequency, an upper limit of CPU idle state (see, for example, C1 and C1E in FIG. 22) to which a transition can be made is determined, and a setting is applied such that a transition to a state deeper than that state cannot be made. This makes it possible to perform restoration from a shallow state at the time of task allocation thereby to reduce the restoration latency time.

Regarding the CPU cores for which an upper limit of CPU idle state is to be set or cancelled, it is possible to determine the number of CPU cores to be used by using the determination logic illustrated in FIG. 4. C-state setting part 132 dynamically sets the upper limit of CPU idle state by using the determination logic illustrated in FIG. 4.

In addition, when increasing CPU cores to be newly used (when increasing CPU cores that have not been used in a while), a C-state upper limit setting may be applied to the CPU cores newly increased to restore the CPU cores to a shallow C-state before allocating tasks to the CPU cores.

FIG. 9 is a diagram illustrating an image of C-state upper limit setting. The upper drawing in FIG. 9 illustrates a case where a C-state upper limit setting is not applied and the lower drawing in FIG. 9 illustrates a case where a C-state upper limit setting is applied.

As illustrated in the upper drawing in FIG. 9, when the C-state upper limit setting is not applied, the state fallen to a CPUidle state (grade C2) and thus the latency time until the state restored to C0 is extended.

On the other hand, as illustrated in the lower drawing in FIG. 9, a C-state upper limit setting is applied (see sign g in FIG. 9) to a CPU core group with a high use frequency to prevent transitions to a deep state, to reduce the restoration latency time at the time of restoring from a shallow state.

<Pooling CPU cores highly likely to be used>

Next, as an extended function of the C-state upper limit setting, pooling CPU cores highly likely to be used will be described.

FIG. 10 is a diagram illustrating pooling highly-likely-to-be-used CPU cores by task scheduler device 100.

As illustrated in FIG. 10, in cases where future use is expected, a CPU core group (dashed box h in FIG. 10) which is set to fall only to a shallow idle state may be prepared. For example, a configuration is adopted in which CPU cores (CPU core #4, CPU core #5) 32 illustrated in FIG. 10 are pooled as a CPU core group capable of transitioning only up to C1.

When a CPU core that is highly likely to be used in the future can be predicted from the tendency of a task like processing the traffic variations between nighttime and daytime, setting is applied to a CPU core group (dashed box h in FIG. 10) highly likely to be used so that it is capable to transitioning to only to a shallow idle state (for example: up to C1, or the like). Then, active standby CPU cores are pooled for preparation so that they can be immediately used when necessary.

In this way, in cases where future use is expected, a configuration is adopted in which a CPU core group set to fall only to a shallow idle state is prepared (for example, a CPU core group capable of transitioning only up to C1 is pooled).

Hereinabove, C-state upper limit setting has been described.

[In-advance wake-up] (Feature <3>: In-advance wake-up)

FIG. 11 is a diagram illustrating an in-advance wake-up by task scheduler device 100.

When using a CPU core having fallen to a deep CPU idle state (C-state), CPU in-advance wake-up part 131 causes the CPU core to wake up in advance (see sign c in FIG. 11).

FIG. 12 is a diagram illustrating an in-advance wake-up by task scheduler device 100. The upper drawing in FIG. 12 illustrates a case of the existing technique, and the lower drawing in FIG. 12 illustrates a case where an in-advance wake-up by task scheduler device 100 is performed.

As illustrated in the upper drawing in FIG. 12, in the case of the existing technique (case where no in-advance wake-up is performed), the delay from the task allocation (reference sign i in the upper drawing in FIG. 12) to the start of operation is large (sign j in the upper drawing in FIG. 12).

On the other hand, as illustrated in the lower drawing in FIG. 12, when an in-advance wake-up is performed, low latency is resulted (sign k in the lower drawing in FIG. 12) from the task allocation to the start of operation due to the in-advance wake-up (sign c in the lower drawing in FIG. 12).

In this way, a CPU core with a low use frequency is caused to transition to a deep C-state to achieve a reduction in the power consumption and a reduction in the influence of the latency time due to the restoration from the deep C-state.

[Operation flow of task scheduler device 100]

FIG. 13 is a flowchart illustrating task scheduling processing by task scheduler device 100.

In step S11, APL 1 (FIG. 1) registers a task in task management part 120 (FIG. 1).

In step S12, task priority assignment part 121 (FIG. 1) assigns a priority to the task as necessary. Task CPU allocation part 123 (FIG. 1) executes priority control of allocation to a CPU core according to the priority.

In step S13, task amount/period prediction part 122 (FIG. 1) measures the task amount per unit time and the CPU use rate according to the determination logic illustrated in FIG. 4 and determines whether it is necessary to increase or decrease the number of CPU cores to be used for operation (branches after the determination are below-described step S14 and step S15).

In step S14, when it is necessary to reduce the number of CPU cores (S14: Yes), the processing proceeds to step S17, and when it is not necessary to reduce the number of CPU cores (S14: No), the processing proceeds to step S15.

In step S15, when it is necessary to increase the number of CPU cores (S15: Yes), the processing proceeds to step S19, and when it is not necessary to increase the number of CPU cores (S15: No), the processing proceeds to step S16.

In step S16, task CPU allocation part 123 (FIG. 1) allocates the arriving task to a CPU core, schedules the task to a task queue prepared on a per-CPU core basis, and finishes the processing of this flow. The allocation to the CPU core may be performed by performing a round-robin on the CPU cores being used, or the task may be allocated to a CPU core with a task queue prepared on a per-CPU core basis and having small residues.

Furthermore, task CPU allocation part 123 (FIG. 1) may preferentially allocate a task with a high priority to a free CPU core according to the assigned priority, or may rearrange the per-CPU core task queue according to the priority.

In step S14, when it is necessary to reduce the number of CPU cores, in step S17, task CPU allocation part 123 (FIG. 1) reduces the number of CPU cores to be used. For example, as a method of reducing the number of CPU cores, a CPU core not to be used onward is determined and tasks are not allocated to the CPU core onward.

In step S18, when a C-state upper limit setting has been applied to the CPU core(s) determined not to be used, C-state setting part 132 (FIG. 1) cancels the C-state upper limit setting and finishes the processing of this flow .

In step S15 described above, when it is necessary to increase the number of CPU cores, in step S19, task amount/period prediction part 122 (FIG. 1) performs an in-advance wake-up on the CPU core(s) to be newly used.

The reason why the in-advance wake-up is performed on the CPU core(s) to be newly used is as follows. That is, there are many CPU products such that the C-state is restored to C0 when certain processing is executed by the CPU core. Considering this, lightweight processing such as a small operation and/or outputting a character string to the standard output is executed by the CPU core to restrain transitions of the CPU core to a deep C-state.

Here, rather than performing the in-advance wake-up, a C-state upper limit setting may be applied to the CPU core to be newly used before a task is allocated thereto to restore the CPU core to a shallow state, as described above in <C-state upper limit setting> (FIG. 8). In this case, the C-state upper limit setting is applied in advance taking into account a time lag from the application of the C-state upper limit setting to the reflection thereof.

In step S20, C-state setting part 132 applies a C-state upper limit setting to the CPU core(s) to be newly used and finishes the processing of this flow. An upper limit state is determined by being set in advance by an operator.

Note that when tasks steadily inflows so that the tasks can be continuously allocated, as an active CPU core group does not transition to a deep C-state, the C-state upper limit setting may not necessarily be applied.

[Hardware configuration]

Task scheduler devices 100 and 100A (FIGS. 1 and 10) according to the embodiment are implemented by, for example, a computer 900 having a configuration as illustrated in FIG. 14.

FIG. 14 is a hardware configuration diagram illustrating an example of computer 900 that implements functions of task scheduler devices 100 and 100A (FIGS. 1 and 10).

Computer 900 includes a CPU 901, a ROM 902, a RAM 903, an HDD 904, a communication interface (I/F) 906, an input and output interface (I/F) 905, and a media interface (I/F) 907.

CPU 901 operates based on a program stored in ROM 902 or HDD 904 and performs control of parts of task scheduler devices 100 and 100A (FIGS. 1 and 10). ROM 902 stores a boot program to be executed by CPU 901 when computer 900 is started up, a program that relies on the hardware of computer 900, and the like.

CPU 901 controls an input device 910 such as a mouse and a keyboard and an output device 911 such as a display via the input/output I/F 905. CPU 901 acquires data from input device 910 and outputs generated data to output device 911 via input/output I/F 905. A graphics processing unit (GPU) or the like may be used together with CPU 901 as the processor.

HDD 904 stores a program executed by CPU 901, data used by the program, and the like. Communication I/F 906 receives data from another device via a communication network (for example, a network (NW) 920), outputs the data to CPU 901, and transmits data generated by CPU 901 to another device via the communication network.

Media I/F 907 reads a program or data stored in a recording medium 912 and outputs the program or data to CPU 901 through RAM 903. CPU 901 loads a program related to desired processing from recording medium 912 onto RAM 903 through media I/F 907, and executes the loaded program. Recording medium 912 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, when computer 900 functions as task scheduler device 100, 100A (FIG. 1, FIG. 10) configured as one device according to the present embodiment, CPU 901 of computer 900 implements the functions of task scheduler device 100, 100A by executing a program loaded onto RAM 903. Further, data in RAM 903 is stored in HDD 904. CPU 901 reads a program related to target processing from recording medium 912 and executes the program. Additionally, CPU 901 may read a program related to target processing from another device via the communication network (NW 920).

[Application example]

(Configuration in which a task scheduler device is deployed in user space 60)

As illustrated in FIG. 2, the present invention is able to be applied to a configuration example in which task scheduler device 100 is deployed in the user space 60. In this case, the OS is not limited. In addition, there is no limitation to being in a server virtualization environment. Thus, the operation system can be applied to each of the configurations illustrated in FIGS. 15 and 16.

<Example of application to VM configuration>

Against the background of advances in virtualization technology achieved through Network Functions Virtualization (NFV), systems are being constructed and operated on a per-service basis. Also, a mode called Service Function Chaining (SFC) is becoming mainstream, in which, based on the above-described mode of constructing a system on a per-service basis, service functions are divided into units of reusable modules and are operated on independent virtual machine (VM: Virtual Machine, Container, etc.) environments, and thereby the service functions are used as needed in a manner as if they are components, and the operability is improved.

A hypervisor environment consisting of Linux (registered trademark) and a kernel-based virtual machine (KVM) is known as a technique for forming a virtual machine. In this environment, a Host OS (an OS installed on a physical server is called a "Host OS") in which a KVM module is incorporated operates as a hypervisor in a memory area called kernel space, which is different from user spaces. In this environment, a virtual machine operates in a user space, and a Guest OS (an OS installed on a virtual machine is called a Guest OS) operates in the virtual machine.

Unlike the physical server in which the Host OS operates, in the virtual machine in which the Guest OS operates, all hardware (HW) including network devices (such as Ethernet (registered trademark) card devices) is controlled via registers, which is needed for interrupt processing from the HW to the Guest OS and for writing from the Guest OS to the hardware. In such register-based control, the performance is generally lower than that in the Host OS environment because the notifications and processing that would have been executed by physical hardware are emulated virtually by software.

FIG. 15 is a diagram illustrating an example in which an operation system 1000A is applied to an interrupt model in a server virtualization environment which is configured with a general-purpose Linux kernel (registered trademark) and a VM. The same constituent parts as those in FIG. 1 are denoted by the same reference signs.

As illustrated in FIG. 15, operation system 1000A includes a Host OS 80 in which a virtual machine and an external process formed outside the virtual machine can operate. Host OS 80 includes a kernel 81 and a driver 82. Operation system 1000A includes a CPU 71 of a HW 70 connected to Host OS 80, and a KVM module 91 embedded in a hypervisor (HV) 90. Further, operation system 1000A includes a Guest OS 95 operating in the virtual machine. Guest OS 95 includes a kernel 96 and a driver 97.

Operation system 1000A includes a task scheduler device 100 connected to Guest OS 95 and deployed in user space 60.

With this configuration, in a system with a VM virtual server configuration, it is possible to perform operations with low latency while achieving power saving in either OS of Host OS 80 or Guest OS 95.

<Example of application to container configuration>

FIG. 16 is a diagram illustrating an example in which an operation system 1000B is applied to an interrupt model in a server virtualization environment configured with a container. The same constituent parts as those in FIGS. 1 and 15 are denoted by the same reference signs.

As illustrated in FIG. 16, operation system 1000B has a container configuration in which the Guest OS 95 illustrated in FIG. 15 is replaced with a container 98. Container 98 has a virtual NIC (vNIC).

In a virtual server configuration system such as a container, it is possible to perform operations with low latency while achieving power saving.

Hereinabove, configurations in which task scheduler device 100 is deployed in user space 60 have been described. Next, a description will be given of configurations in which task scheduler device 100 is deployed in a kernel.

(Configuration in which task scheduler device is deployed in kernel in OS)

As illustrated in FIG. 3, the present invention is able to be applied to a configuration example in which task scheduler device 100 is deployed in OS 50. In this case, the OS is not limited. In addition, there is no limitation to being in a server virtualization environment. Thus, the operation system is able to be applied to each configuration illustrated in FIGS. 17 and 18.

<Example of application to VM configuration>

FIG. 17 is a diagram illustrating an example in which an operation system 1000C is applied to an interrupt model in a server virtualization environment configured with a general-purpose Linux kernel (registered trademark) and a VM. The same constituent parts as those in FIGS. 1 and 15 are denoted by the same reference signs.
As illustrated in FIG. 17, in operation system 1000C, a task scheduler device 100 is deployed in a kernel 81 of a Host OS 80 and a task scheduler device 100 is deployed in a kernel 96 of a Guest OS 95.
With this configuration, in a VM virtual server configuration system, it is possible to perform operations with low latency while achieving power saving in either OS of Host OS 80 or Guest OS 95.

<Example of application to container configuration>

FIG. 18 is a diagram illustrating an example in which an operation system 1000D is applied to an interrupt model in a server virtualization environment configured with a container. The same constituent parts as those in FIGS. 1 and 16 are denoted by the same reference signs.
As illustrated in FIG. 19, in operation system 1000D, a task scheduler device 100 is deployed in a kernel 81 of a Host OS 80.
In a virtual server configuration system such as a container, it is possible to perform operations with low latency while achieving power saving.

<Example of application to bare metal configuration (non-virtualization configuration)>

The present invention is able to be applied to a non-virtualization configuration system such as a bare metal configuration. In a non-virtualization configuration system, it is possible to perform operations with low latency while achieving power saving.

<Application to processor other than CPU>

The present invention is able to be applied in a similar manner to processors such as GPUs, FPGAs, or ASICs in addition to CPUs when the processor has an idle state function.

<Application to CPU operation frequency control>

In the present invention, the in-advance wake-up according to the embodiment is also able to be applied to a configuration in which, when the operation frequency of a processor has been lowered, the frequency is restored to the original frequency prior to task allocation.

<Application to functions other than CPU>

The present invention is also able to be applied to functions other than CPUs, such as memory and storage (for example, an HDD and an SSD), in addition to CPUs. Further, it is also able to be applied to a component for externally connected peripheral equipment or the like to, when the component is in a power saving mode, wake up the component in advance to be prepared for use.

[Effects]

As described above, provided is a task scheduler device 100,100A (FIG. 1, FIG. 10) that, in a calculation system 1000 (FIG. 1, FIG. 10) that reduces power consumption by reducing stepwise an operation state of a processor according to a processing load, allocates tasks to a core group of the processor, the task scheduler device 100,100A (FIG. 1, FIG. 10) including: a processor use rate acquisition part (task amount/period prediction part 122) that acquires a use rate of the processor, and a task allocation part (task CPU allocation part 123) that, based on the use rate of the processor acquired by the processor use rate acquisition part, continuously allocates tasks to a core or a core group of the processor to be used at a predetermined frequency or more
With this, a CPU core group (active CPU core group) to be frequently used is kept by the determination logic illustrated in FIG. 4 according to the use rate (e.g., a task amount) of the processor, and tasks are continuously allocated to the CPU core group, thereby preventing transitions to a deep C-state. Thereby, it is possible to reduce the restoration latency from the C-state. On the other hand, as CPU cores other than the active CPU cores are able to transition to a deep C-state (e.g., C6), it is possible to achieve power saving. As a result, from the perspective of the entire calculation system 1000, it is possible to perform operations with low latency while achieving power saving.
As it is possible to cause a CPU core to fall to a deep C-state, it is possible to enjoy the power saving effect to the maximum and to avoid a problem of falling to a deep C-state and taking a long time for restoration.
Further, as the number of CPU cores to be used can be dynamically increased or decreased according to the task amount and/or the CPU use rate, it is possible to perform dynamic scaling-in or scaling-out based on the task amount.
Furthermore, as a plurality of pieces of determination logic (FIG. 4) for changing the number of CPU cores to be used can be selected according to the task amount and/or the CPU use rate, it is possible to handle various tasks.

The task scheduler device 100,100A (FIG. 1, FIG. 10) includes an operation state setting part (C-state setting part 132) that sets an upper limit to the core or the core group of the processor used at the predetermined frequency or more so that the core or the core group is unable to cause a transition of the operation state of the processor to a deeper state.

In this manner, an upper limit of transitionable CPU idle state is set for to the CPU core(s) to be frequently used to prevent transitions to a deep C-state and reduce the restoration latency. Thereby, it is possible to reduce the latency time from task allocation to the start of operation and perform the operation with high real-time capability.

In particular, it is effective as a countermeasure for a case where tasks are not continuously allocated to a CPU core group with a high use frequency.

In addition, by assigning priorities to the tasks, a task desired to be prioritized can be preferentially operated. A task to be preferentially operated is guaranteed a quality of service (QoS), for example.

In the task scheduler device 100,100A (FIG. 1, FIG. 10), the operation state setting part (C-state setting part 132) applies a setting to a core or a core group to which no task is allocated by the task allocation part (task CPU allocation part 123) so that the core or the core group is able to cause a transition of the operation state of the processor to a deeper state.

In this manner, while continuously allocating tasks to a CPU core group (active CPU core group) to be frequently used to prevent transitions to a deep C-state (reduction in the restoration latency from the C-state), the CPU cores other than the active CPU cores are able to transition to a deep C-state, making it possible to achieve power saving.

The task scheduler device 100,100A (FIG. 1, FIG. 10) includes an in-advance wake-up part (CPU in-advance wake-up part 131) that performs, on a core to be newly used or a core to be used again without having been used for a predetermined period, when allocating a task, an in-advance wake-up for restoring the operation state of the processor to its original state.

As the basic idea, when it takes a time from allocating a task until the restoration is performed after the processing finishes, an in-advance wake-up is performed for a time until the restoration so as to prepare CPU in advance into a state where CPU can be used.

In this way, a restoration time from a deep state can be reduced by, before a task is allocated to a CPU core that has transitioned to a deep state, performing an in-advance wake-up on the CPU core. It is assumed that a core to be newly used or a core to be used again without having been used for a predetermined period is in a deep C-state. It is possible to reduce the restoration time from the deep C-state by performing an in-advance wake-up before allocating a task. For example, when increasing the number of CPU cores to be used, the pertinent CPU core(s) are waken up in advance, to make it possible to reduce the latency time from task allocation to the start of operation to perform the operation with high real-time capability even when the CPU core(s) have fallen to a deep CPU idle state.

Further provided is a calculation system 1000 (FIG. 1, FIG. 10) that reduces power consumption by reducing stepwise an operation state of a processor according to a processing load, the processor (CPU) including a plurality of core groups (CPU cores (CPU core #0, CPU core #1,...) 32), the calculation system 1000 including: a task scheduler device 100,100A (FIG. 1,

FIG. 10) that allocates tasks to a core group of the processor, wherein the task scheduler device 100,100A includes: a processor use rate acquisition part (task amount/period prediction part 122) that acquires a use rate of the processor; and a task allocation part (task CPU allocation part 123) that, based on the use rate of the processor acquired by the processor use rate acquisition part, continuously allocates tasks to a core or a core group of the processor to be used at a predetermined frequency or more.

The calculation systems 1000 to 1000D (FIG. 1, FIG. 10, and FIGS. 15 to 18) are techniques that are not limited to tasks of packet arrival and processing and extended to general tasks, for example, calculation of $\pi$.

Tasks are continuously allocated to a CPU core group to be frequently used (active CPU core group) according to the use rate of the processor, making it possible to prevent transitions to a deep C-state and thus reduce the restoration latency from the C-state. On the other hand, as the CPU cores other than the active CPU cores can transition to a deep C-state, it is possible to achieve power saving. That is, an in-advance wake-up can keep a LPI (C-state) as deep as possible for as long as possible while reducing the restoration latency from the C-state, making it possible to achieve both low latency and power saving.

As the above-described processor, in addition to CPUs, processors such as GPUs, FPGAs, and ASICs is applicable in a similar manner when the processor has an idle state function.

In the calculation system 1000 (FIG. 1, FIG. 10), it is possible to achieve both low latency and power saving. In particular, tasks are continuously allocated to a CPU core group (active CPU core group) to be frequently used to avoid a problem that the latency time is extended due to the CPU cores having fallen to a deep idle state. Thereby, it is possible to guarantee low latency.

Among the processes described in the above embodiments, all or some of the processes described as being automatically performed can also be manually performed, or all or some of the processes described as being manually performed can also be performed automatically using a known method. Furthermore, information including processing procedures, control procedures, specific names, and various types of data and parameters set forth in the description and drawings given above can be freely changed unless otherwise specified.

In addition, the constituent elements of the devices shown are ideational functions and may not be necessarily configured physically as shown. That is, the specific form of distribution and integration of the respective devices is not limited to the shown form, and all or a part thereof can be configured to be functionally or physically distributed and integrated in any unit according to various loads, usage conditions, and the like.

In addition, the above configurations, functions, processing units, processing means, and the like may be realized by hardware by designing a part or all of them with, for example, an integrated circuit, and the like. Further, the above-mentioned structures, functions, and the like may be realized by software for interpreting and executing programs for realizing the respective functions by the processor. Information such as a program, a table, a file for realizing each function is stored in a recording device such as a memory, a hard disk, a solid state drive (SSD), or a recording medium such as an integrated circuit (IC) card, a secure digital (SD) card, or an optical disc.

[Reference Signs List]

31 Hardware (HW)

32 CPU core (processor)

1, 1-1, 1-2, 1-3 Application (APL)

100, 100A Task scheduler device

110 Management part

111 Operator setting part

120 Task management part

121 Task priority assignment part

122 Task amount/period prediction part (processor use rate acquisition part)

123 Task CPU allocation part (task allocation part)
120 Task management part

130 CPU idle state control part

131 CPU in-advance wake-up part (in-advance wake-up part)

132 C-state setting part (operation state setting part)

1000, 1000A, 1000B, 1000C, 1000D Operation system (calculation system)

CPU core #0, CPU core #1,... CPU core

**Claims**

1. A task scheduler device that, in a calculation system that reduces power consumption by reducing stepwise an operation state of a processor according to a processing load, allocates tasks to a core group of the processor, the task scheduler device comprising:

    a processor use rate acquisition part that acquires a use rate of the processor; and
    a task allocation part that, based on the use rate of the processor acquired by the processor use rate acquisition part, continuously allocates tasks to a core or a core group of the processor to be used at a predetermined frequency or more.

2. The task scheduler device according to claim 1, further comprising:
an operation state setting part that sets an upper limit to the core or the core group of the processor used at the predetermined frequency or more so that the core or the core group is unable to cause a transition of the operation state of the processor to a deeper state.

3. The task scheduler device according to claim 2, wherein the operation state setting part applies a setting to a core or a core group to which no task is allocated by a task allocation part so that the core or the core group is able to cause a transition of the operation state of the processor to a deeper state.

4. The task scheduler device according to claim 1, further comprising:
an in-advance wake-up part that performs, on a core to be newly used or a core to be used again without having been used for a predetermined period, when allocating a task, an in-advance wake-up for restoring the operation state of the processor to its original state.

5. A calculation system that reduces power consumption by reducing stepwise an operation state of a processor according to a processing load, the processor including a plurality of core groups, the calculation system comprising:

    a task scheduler device that allocates tasks to a core group of the processor,
    wherein the task scheduler device comprises:

a processor use rate acquisition part that acquires a use rate of the processor; and a task allocation part that, based on the use rate of the processor acquired by the processor use rate acquisition part, continuously allocates tasks to a core or a core group of the processor to be used at a predetermined frequency or more.

6. A task scheduling method of a task scheduler device that, in a calculation system that reduces power consumption by reducing stepwise an operation state of a processor according to a processing load, allocates tasks to a core group of the processor, the task scheduling method comprising:

a step of acquiring a use rate of the processor; and
a step of, based on the acquired use rate of the processor, continuously allocating tasks to a core or a core group of the processor to be used at a predetermined frequency or more.

7. A program for causing a computer to function as the task scheduler device according to any one of claims 1 to 4.

# FIG.1

# FIG.2

# FIG.3

# FIG.4

| Logic | | Synopsis | Examples of applicable task |
|---|---|---|---|
| 1. Determine based on task arrival pattern | 1. Threshold-based determination | Define thresholds with respect to the task amount per unit time; when the task amount exceeds a threshold, use a new CPU core [or a CPU core that has not been used in a while]. | Tasks with fixed operation times |
| | 2. Periodicity | In cases where tasks arrive with periodicity, increase or decrease the number of CPU cores to be used according to the period. | Tasks with fixed operation times and with periodicity [RAN signal processing, video stream processing, and the like] |
| | 3. Machine learning | Perform machine learning on increase/decrease patterns of task; infer the future task amount based on arrival patterns of tasks; and based on this inference result, determine the number of required CPU cores and whether to use a new CPU. | Tasks with fixed operation times |
| 2. Determine based on CPU use rate | 1. Threshold-based determination | When the CPU use rate per unit time of a CPU core being used exceeds a preset threshold, use a new CPU core [or a CPU core that has not been used in a while]. | Generally applicable |
| | 2. Periodicity | In a case where the CPU use rate varies with periodicity, increase or decrease the number of CPU cores according to the period [same as in 1.2] | Tasks with periodicity |
| | 3. Machine learning | Infer the future CPU use rate based on the variation patterns of the CPU use rate per unit time of CPU cores being used; and based on the inference result, determine the number of required CPU cores and whether to use a new CPU. | Generally applicable |

EP 4 557 052 A1

# FIG.5

1000

1-1 , 1    1-2 , 1    1-3 , 1    ...

APL    APL    APL

d

Task    Task    Task

100

TASK SCHEDULER DEVICE

120

TASK MANAGEMENT PART

130

CPU IDLE STATE CONTROL PART

110

MANAGEMENT PART

121

TASK PRIORITY ASSIGNMENT PART

131    b    132

111

OPERATOR SETTING PART

TASK AMOUNT/PERIOD PREDICTION PART

122

CPU IN-ADVANCE WAKE-UP PART

C-STATE SETTING PART

123

TASK CPU ALLOCATION PART

a

37

Task queue    Task queue    Task queue    Task queue    Task queue    ...

33

OS

C
In-advance wake up

32

CPU core #0    CPU core #1    CPU core #2    CPU core #3    CPU core #4    ...

Hardware

31

# FIG.6

| W_input | Number of CPU cores to be used |
|---------|-------------------------------|
| aa〜bb | 1 |
| bb〜cc | 2 |
| cc〜dd | 3 |
| dd〜ee | 4 |
| ee〜ff | 5 |
| ... | ... |

# FIG.7

Average CPU use rate of
CPU cores being used

100%

Threshold_upper

e

Threshold_base

f

Time

# FIG.8

# FIG.9

C-state

C0
C1
C2
C3
C4
C5
C6

Time

CPU
processes
mask

C-state

Preparation
period until
restoration

CPU
processes
mask

C-state

C-state

C0
C1
C2
C3
C4
C5
C6

Time

g
C-state upper limit

CPU
processes
mask

C-state

Preparation
period until
restoration

CPU
processes
mask

C-state

# FIG.10

# FIG.11

# FIG.12

C-state

C0
C1
C2
C3
C4
C5
C6

j

Task allocation
i

Time

No task | Latency time until restoration | CPU processes task | C-state

C-state

C0
C1
C2
C3
C4
C5
C6

Task allocation
k

In-advance wake-up
c

Time

No task | Latency time until restoration | CPU processes task | C-state

# FIG.13

START

S11

The application registers a task in the task management part.

S12

The task priority assignment part assigns a priority to the task as necessary.

S13

The task amount/period prediction part measures the task amount per unit time and the CPU use rate according to the determination logic illustrated in FIG. 4 and determines whether it is necessary to increase or decrease the number of CPU cores to be used for operation.

S14

It is necessary to decrease the number of CPU cores?

Yes →

No

S15

It is necessary to increase the number of CPU cores?

Yes →

No

S16

The task CPU allocation part allocates the arriving task to a CPU core and schedules the task to a task queue prepared on a per-CPU core basis. At this time, the task CPU allocation part may preferentially allocate a task with a high priority to a free CPU core according to the assigned priority.

END

S17

The task CPU allocation part reduces the CPU cores to be used.

S18

When a C-state upper limit setting has been applied to the CPU core(s) determined not to be used, C-state setting part cancels the C-state upper limit setting.

S19

The task amount/period prediction part performs an in-advance wake-up on the CPU core(s) to be newly used.

S20

The C-state setting part applies a C-state upper limit setting to the CPU core(s) to be newly used.

# FIG.14

900

COMPUTER

901
CPU

902
ROM

903
RAM

904
HDD

905
INPUT/
OUTPUT I/F

906
COMMUNI-
CATION I/F

907
MEDIA
I/F

910
INPUT
DEVICE

911
OUTPUT
DEVICE

922
NW

912
RECORDING
MEDIUM

# FIG.15

60 User space

APL — 1

1000A

TASK SCHEDULER DEVICE — 100

Guest OS

Kernel — 95

— 96

— 97

Driver

HV — 90

KVM — 91

Host OS

Kernel — 80

— 81

— 82

Driver

HW — 70

CPU

71

# FIG.16

60 User space

APL — 1

1000B

TASK SCHEDULER DEVICE — 100

Container — 98

Host OS

Kernel — 80

— 81

— 82

Driver

HW — 70

CPU

71

## FIG.17

1000C

APL — 1

Guest OS

Kernel — 95

TASK SCHEDULER DEVICE — 100

— 96

Driver — 97

HV — 90

KVM — 91

Host OS

Kernel — 80

TASK SCHEDULER DEVICE — 100

— 81

Driver — 82

HW — 70

CPU — 71

## FIG.18

1000D

APL — 1

Container — 98

Host OS

Kernel — 80

TASK SCHEDULER DEVICE — 100

— 81

Driver — 82

HW — 70

CPU — 71

# FIG.19

BASE STATION [BBU] — 30

1-1 , 1    1-2 , 1    1-3 , 1    34

20

L1 APL    L2 APL    L3 APL    TASK SCHEDULER DEVICE

33

OS or the like

Hardware    CPU    32

31

40

Core network

# FIG.20

1-1 , 1    1-2 , 1    1-3 , 1

L1 APL    L2 APL    L3 APL

Task    Task    Task

34

TASK SCHEDULER DEVICE

Task management, priority assignment, task allocation

37

Task queue    Task queue    Task queue    Task queue    Task queue    ...

32

CPU core #0    CPU core #1    CPU core #2    CPU core #3    CPU core #4    ...

# FIG.21

| Name | State | Description of state |
|---|---|---|
| C0 | Operating state | CPU is completely ON |
| C1 | Halt | A main built-in clock of CPU is stopped by software; bus interface unit and APIC continue to operate at the maximum speed. |
| C2 | Stop clock | A built-in clock and an external clock of CPU are stopped by hardware. |
| C3 | Deep sleep | All the built-in clocks and the external clocks of CPU are stopped. |
| C4 | Deeper sleep | CPU voltage is reduced |
| C5 | Enhanced deeper sleep | CPU voltage is further reduced and memory cache is turned OFF |
| C6 | Deep power down | Internal voltage of CPU is lowered to any value, including a voltage of zero. |

EP 4 557 052 A1

# FIG.22

| C-state | Residency | Wake-up latency |
|---------|-----------|-----------------|
| C0 | Active | Active |
| C1 | 2 $\mu$s | 2 $\mu$s |
| C1E | 20 $\mu$s | 10 $\mu$s |
| C3 | 100 $\mu$s | 33 $\mu$s |
| C6 | 400 $\mu$s | 133 $\mu$s |

# FIG.23

| CPU idle Governor | Applicability | Synopsis |
|---|---|---|
| ladder | System with tick | First, only transitions to the most shallow state are allowed; when there is no task in the period up to a tick, stepwise transitions to a deep state are performed [as the shallow state is kept when there is no tick, the system has to be tick-based] |
| menu | Tickless system | The idle period and idle state are estimated by a heuristic approach. The next idle period is estimated based on the latest eight idle periods, and a transition to an idle state suitable to the idle period is caused [a direct transition to a deep state can be caused]. |

EP 4 557 052 A1

# FIG.24

EP 4 557 052 A1

Record of latest idle times

| Latest 8 idle times |
| --- |
| 1.xxx ms |
| 2.xxx ms |
| 3.xxx ms |
| 4.xxx ms |
| 5.xxx ms |
| 6.xxx ms |
| 7.xxx ms |
| 8.xxx ms |

Estimation of next idle time

When the deviation is small, an average value T_avr is adopted as the next idle time. [When the deviation is large, the maximum value is deleted and calculation is performed again]

Estimation of suitable idle state depth

When the next idle time estimation value T_avr is comparable to the exit latency, the time for restoring from an idle state (Cx), the state is determined as being excessively deep and a transition to an idle state of Cx-1 is caused.

# FIG.25

C-state

Occurrence of task

C0
C1
C2
C3
C4
C5
C6

Time

CPU
processes
task

No task

Latency
time until
restoration

CPU
processes
task

# FIG.26

C-state

C0
C1
C2
C3
C4
C5
C6

Occurrence of task

Time

CPU
processes
task

No task

Latency
time until
restoration

CPU
processes
task

## INTERNATIONAL SEARCH REPORT

| International application No. |
| --- |
| **PCT/JP2022/027327** |

**A. CLASSIFICATION OF SUBJECT MATTER**

*G06F 1/329*(2019.01)i; *G06F 1/3287*(2019.01)i; *G06F 9/50*(2006.01)i
FI: G06F1/329; G06F1/3287; G06F9/50 120A

According to International Patent Classification (IPC) or to both national classification and IPC

**B. FIELDS SEARCHED**

Minimum documentation searched (classification system followed by classification symbols)

G06F1/329; G06F1/3287; G06F9/50

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2015/0033055 A1 (KRISHNAPURA, Sheshaprasad G.) 29 January 2015 (2015-01-29) paragraphs [0014]-[0038], fig. 1-3 | 1, 4-7 |
| A | | 2-3 |
| Y | US 2008/0244227 A1 (GEE, Timothy W.) 02 October 2008 (2008-10-02) paragraphs [0023], [0052], [0054], fig. 1, 3-4 | 1, 4-7 |
| Y | JP 2015-513336 A (TEXAS INSTRUMENTS JAPAN LIMITED) 07 May 2015 (2015-05-07) paragraph [0022] | 4 |
| A | JP 2018-169882 A (NEC CORP) 01 November 2018 (2018-11-01) entire text, all drawings | 1-7 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 September 2022** | **27 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/027327**

| Patent document cited in search report | | | Publication date (day/month/year) | Patent family member(s) | | | Publication date (day/month/year) |
|---|---|---|---|---|---|---|---|
| US | 2015/0033055 | A1 | 29 January 2015 | (Family: none) | | | |
| US | 2008/0244227 | A1 | 02 October 2008 | CN | 101105711 | A | |
| JP | 2015-513336 | A | 07 May 2015 | US | 2013/0198540 | A1 | |
| | | | | paragraph [0025] | | | |
| | | | | CN | 104094191 | A | |
| JP | 2018-169882 | A | 01 November 2018 | US | 2018/0284875 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANIEL MOLKA** ; **MICHAEL WERNER**. Wake-up latencies for processor idle states on current x86 processors. *Robert Schone*, 06 June 2022, https://link.springer.com/article/10.1007/s00450-014-0270-z#citeas>